# EUROPEAN PATENT APPLICATION

(11) **EP 4 283 204 A1**
(43) Date of publication of application: **29.11.2023**
(21) Application number: 21932699.8
(22) Date of filing: 24.11.2021
(51) Int. Cl.: F24F 3/14, F24F 13/32, B60B 33/00

(54) **WATER TANK AND DEHUMIDIFIER**

(30) Priority: 22.03.2021 CN 202110305335
(71) Applicant: GD Midea Air-Conditioning Equipment Co., Ltd., Foshan, Guangdong 528311 (CN)
(72) Inventor: LIU, Fashen, Foshan, Guangdong 528311 (CN)
(74) Representative: Whitlock, Holly Elizabeth Ann
(86) International application number: PCT/CN2021/132840
(87) International publication number: WO 2022/199091

(57) **Abstract**

A water tank (10), which is used for a dehumidifier. The water tank (10) comprises a tank body (11), a moving wheel (13) and a limiting member (20), wherein a mounting groove (12) is provided in the bottom of the tank body (11), and two opposite groove side walls of the mounting groove (12) are respectively provided with a limiting groove (122); the moving wheel (13) comprises a connecting base (131) and a wheel body (132) mounted on the connecting base (131); two opposite sides of the connecting base (131) are respectively mounted in the two limiting grooves (122); and the limiting member (20) is at least partially arranged in the mounting groove (12) and used for limiting the connecting base (131) from sliding out of the limiting grooves (122). Further provided is a dehumidifier comprising the water tank (10). The water tank is convenient for a user to carry.

## Description

The present application claims priority to Chinese Patent Application No. 202110305335.4, filed on March 22, 2021, the entire contents of which are incorporated herein by reference.

### TECHNICAL FIELD

The present application relates to the technical field of air dehumidification, in particular, to a water tank and a dehumidifier.

### BACKGROUND

In a current dehumidifier, the water tank and the body are arranged separately, and the body is placed above the water tank. The dehumidified water generated when the body works can drip into the water tank. However, currently, when the water tank is transported, the water tank is usually moved by embracing the water tank or by lifting the water tank through a lifting structure, which is laborious and inconvenient for users to carry.

### TECHNICAL PROBLEM

The main purpose of the present application is to provide a water tank, which is intended to facilitate the user to carry the water tank.

### TECHNICAL SOLUTION

In order to achieve the above purpose, the water tank provided in the present application includes:
a box body; wherein an installation groove is provided at a bottom of the box body; and two opposite side walls of the installation groove are provided with limit grooves;
a moving wheel, provided with a connection seat and a wheel body mounted at the connection seat; wherein wo opposite sides of the connection seat are respectively installed in the two limit grooves; and
a limit member disposed at least partially in the installation groove, so as to restrict the connection seat from sliding out of the limit groove.

In an embodiment, the installation groove includes a first groove body and a second groove body connected to the first groove body; a groove side wall of the first groove body is provided with a limit rib, and the limit rib is spaced from a groove bottom wall of the first groove body to form the limit groove; the connection seat is configured to slide into the limit groove from the second groove body, and the limit member is mounted at the second groove body.

In an embodiment, the limit member is provided with an insertion member, and when the limit member is installed in the second groove body, the insertion member is inserted into one end of the limit groove close to the second groove body so as to limit the movement of the connection seat toward the second groove body.

In an embodiment, a first inclined surface is formed at an insertion hole of the limit rib, and in a direction in which the first groove body points to the second groove body, the first inclined surface is configured to extend in a direction away from the groove bottom wall of the first groove body obliquely; and/or
the insertion member is provided with a second inclined surface, and in a direction of inserting the insertion member into the limit groove, the second inclined surface is configured to extend toward the direction close to the groove bottom wall of the first groove body obliquely.

In an embodiment, the limit member is engaged with the second groove body.

In an embodiment, a groove side wall of the second groove body is provided with a snap slot, and the limit member is provided with an elastic buckle, and the elastic buckle is engaged with the snap slot.

In an embodiment, the limit member includes a main body and the elastic buckle; a side of the main body toward the snap slot is formed with an avoidance gap, and the elastic buckle includes an elastic arm and a snap protrusion laterally protruding from the elastic arm; the elastic arm is arranged in the avoidance gap and connected to the main body, and a side of the elastic arm away from the snap slot is spaced from the main body; and the snap protrusion is engaged with the snap slot.

In an embodiment, the elastic arm is provided with an unlock member for opening the snap protrusion and the snap slot.

In an embodiment, the unlock member includes an unlock gap provided on the elastic arm, and the unlock gap is located on a side of the elastic arm toward the snap slot.

In an embodiment, the limit member is further provided with a pull-out member, and the pull-out member is configured to pull the limit member out from the second groove body.

In an embodiment, the pull-out member includes a cutout hole, and the cutout hole passes through at least a surface of the limit member away from a groove bottom wall of the second groove body.

In an embodiment, an upper end of the box body is provided with a drain gap; the water tank further includes a drain cover, and the drain cover is detachably mounted at the drain gap.

In an embodiment, one of the drain gap and the drain cover is provided with a slide rail, and the other is provided with a slide groove; and the slide groove is slidably matched with the slide rail to make the drain cover fit into the drain gap.

In an embodiment, a lower end of the drain cover is snap-fitted with an edge of the drain gap.

In an embodiment, a lower side of the drain cover is provided with a buckle, and the edge of the drain gap is provided with a flange; the buckle is snap-fitted with the flange.

The present application also provides a dehumidifier, including a body and a water tank; wherein the dehumidifier is provided with a working state and a non-working state; and in the working state, the body is located at the upper end of the water tank, and in the non-working state, the body is at least partially accommodated in the water tank.

### BENEFICIAL EFFECT

In the technical solution of the present application, an installation groove is provided at the bottom of the water tank, and limit grooves are provided on the two opposite side walls of the installation groove. When the moving wheel is installed, the connection seat of the moving wheel can be installed in the installation groove, and two opposite sides of the connection seat are respectively slid into the two limit grooves, so that the connection seat can be restricted from coming out of the notch of the installation groove. Then, the connection seat can be fixed in the installation groove by setting the limit member to limit the connection seat from sliding out of the limit groove, so as to fix the moving wheel and the box body. In this way, when the water tank is transported to perform operations such as pouring water, the water tank can be pushed to move, this can reduce the need to lift or hold the water tank for transportation, which greatly facilitates the user to carry the water tank. Moreover, compared with the method of directly attaching the connection seat to the box body with screws, in this solution, after the connection seat is inserted into the limit groove, the limit groove can restrict the connection seat from moving in the direction of the notch of the installation groove, and the limit member only needs to limit the connection seat from sliding out of the limit groove, so that the fixing of the connection seat at the bottom of the box can be realized. That is, the connection seat is respectively limited in two directions by the limit groove and the limit member, which reduces the pressure of the limit member and the limit groove. In this way, there is no need to add too many connection structures at the bottom of the water tank to strengthen the stability of the limit member, so that while ensuring the stable installation of the moving wheel, it is beneficial to simplify the structure of the bottom of the water tank and avoid increasing the overall height of the water tank or reducing the volume of the water tank.

### BRIEF DESCRIPTION OF THE DRAWINGS

In order to more clearly illustrate the embodiments of the present application or the technical solutions in the related art, the accompanying drawings that need to be used in the description of the embodiments or the related art will be briefly introduced below. Obviously, the accompanying drawings in the following description are only some embodiments of the present application, and those skilled in the art can also obtain other drawings according to the structures shown in these drawings without creative effort.
FIG. 1 is a schematic structural view of a water tank according to an embodiment of the present application.
FIG. 2 is an enlarged view at A in FIG. 1.
FIG. 3 is a sectional schematic view of the water tank in FIG. 1.
FIG. 4 is an enlarged view at B in FIG. 3.
FIG. 5 is a structural view of a box body in FIG. 1.
FIG. 6 is an enlarged view at C in FIG. 5.
FIG. 7 is a structural schematic view of a limit member in FIG. 2.
FIG. 8 is a sectional schematic view of the water tank in FIG. 1 at another position.
FIG. 9 is an enlarged view at D in FIG. 8.
FIG. 10 is a sectional schematic view of the water tank in FIG. 1 at another position.
FIG. 11 is an enlarged view at E in FIG. 10.
FIG. 12 is a structural schematic view of the water tank in FIG. 1 viewed from another angle.
FIG. 13 is an enlarged view at F in FIG. 12.
FIG. 14 is a sectional schematic view of the water tank in FIG. 12.
FIG. 15 is an enlarged view at G in FIG. 14.
FIG. 16 is a structural schematic view of a dehumidifier according to an embodiment of the present application, where the body is in a working state.
FIG. 17 is a schematic structural view of the body and the water tank when the body in FIG. 16 is in a non-working state.

### Description of reference characters:

| Reference character | Name | Reference character | Name |
|---|---|---|---|
| 10 | water tank | 14 | drain cover |
| 11 | box body | 141 | slide groove |
| 111 | drain gap | 142 | buckle |
| 112 | slide rail | 20 | limit member |
| 113 | flange | 21 | main body |
| 12 | installation groove | 211 | insertion member |
| 121 | first groove body | 212 | second inclined surface |
| 122 | limit groove | 22 | elastic buckle |
| 123 | limit rib | 221 | elastic arm |
| 124 | first inclined surface | 222 | clamping protrusion |
| 125 | second groove body | 23 | unlock gap |
| 126 | snap slot | 24 | cutout hole |
| 13 | moving wheel | 25 | avoidance gap |
| 131 | connection seat | 30 | body |
| 132 | wheel body | | |

The realization of the purpose of the present application, functional characteristics and advantages will be further described with reference to the accompanying drawings in conjunction with the embodiments.

### DETAILED DESCRIPTION OF THE EMBODIMENTS

The technical solutions in the embodiments of the present application will be clearly and completely described below with reference to the drawings in the embodiments of the present application. Obviously, the described embodiments are only a part of the embodiments of the present application, rather than all the embodiments. Based on the embodiments in the present application, all other embodiments obtained by those skilled in the art without creative work fall within the protection scope of the present application.

It should be noted that if there are directional indications (such as up, down, left, right, front, back, etc.) involved in the embodiments of the present application, the directional indications are only used to explain the relative positional relationship and movement condition among the components in a specific posture. If the specific posture changes, the directional indications also change accordingly.

In addition, if there are descriptions related to "first," "second," etc. in the embodiments of the present application, the descriptions of "first," "second," etc. are only for the purpose of description, and should not be understood as indicating or implying its relative importance or implicitly indicates the number of technical features indicated. Thus, a feature delimited with "first," "second" may expressly or implicitly include at least one such feature. In addition, the technical solutions between the various embodiments can be combined with each other, but must be based on the realization by those skilled in the art. When the combination of technical solutions is contradictory or cannot be realized, it should be considered that the combination of such technical solutions does not exist, and is not within the protection scope claimed in the present application.

The present application provides a water tank for a dehumidifier, that is, for receiving dehumidified water generated by a dehumidification device of the dehumidifier.

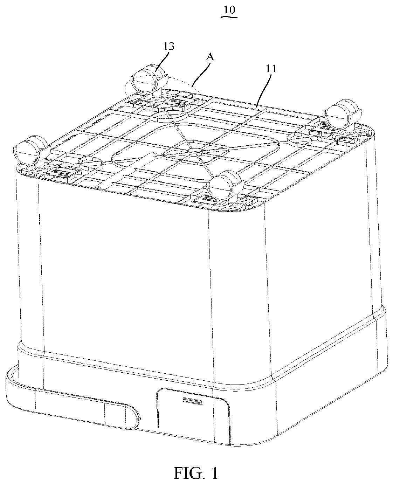

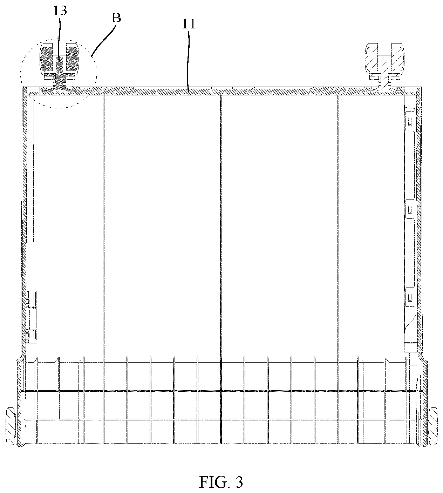

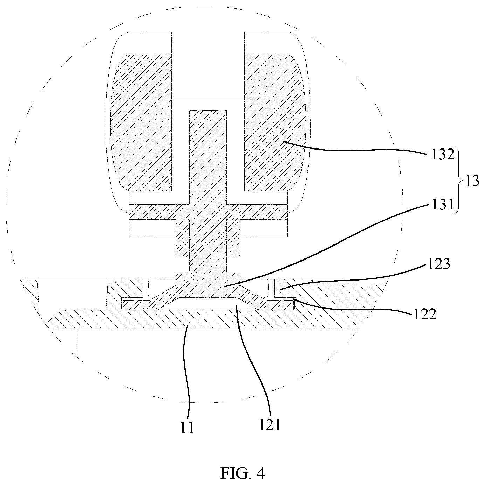

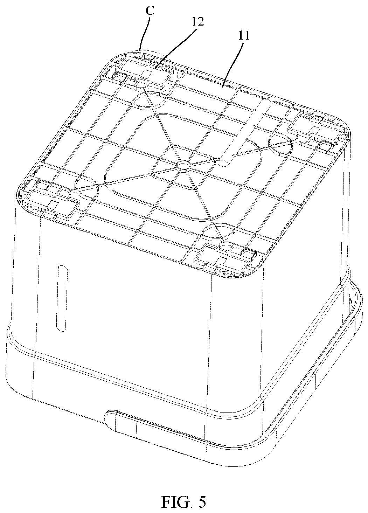

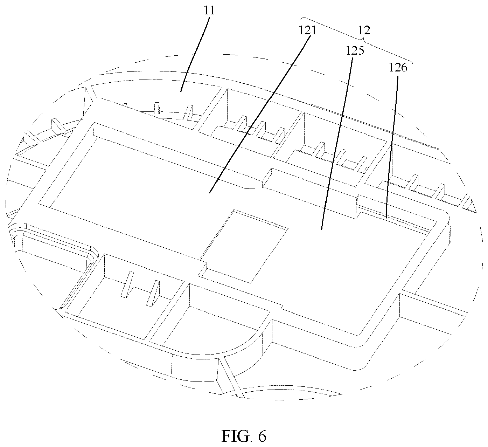

In the embodiment of the present application, referring to FIG. 1 to FIG. 6, the water tank 10 includes a box body 11, a moving wheel 13 and a limit member 20. An installation groove 12 is provided at the bottom of the box body 11, and two opposite groove side walls of the installation groove 12 are provided with limit grooves 122. The moving wheel 13 includes a connection seat 131 and a wheel body 132 mounted at the connection seat 131. Two opposite sides of the connection seat 131 are respectively installed in the two limit grooves 122. The limit member 20 is at least partially disposed in the installation groove 12 to limit the connecting base 131 from sliding out of the limit groove 122.

In this embodiment, the box body 11 has an opening, and the limit groove 122 is provided on the bottom surface of the box body 11, that is, the limit groove 122 is provided on the surface of the box body 11 away from the opening. The limit groove 122 has an insertion hole, and the connection seat 131 is inserted into the limit groove 122 from the insertion hole. The limit member 20 can be arranged on the side of the connection seat 131 toward the insertion hole, or an insertion hole can be provided on the connection seat 131. The limit member 20 passes through the groove wall of the limit groove 122 and is inserted into the insertion hole on the connection seat 131, so that the connection seat 131 can be restricted from sliding out of the insertion hole. The number of the moving wheels 13 can be two, three, four or more.

In the technical solution of the present application, the installation groove 12 is provided at the bottom of the water tank 10, and two opposite groove side walls of the installation groove 12 are provided with limit grooves 122. When the moving wheel 13 is installed, the connection seat 131 of the moving wheel 13 can be installed in the installation groove 12, and two opposite sides of the connection seat 131 are respectively slid into the two limit grooves 122, so that the connection seat 131 can be restricted from coming out of the notch of the mounting slot 12. Then, the connection seat 131 is restricted from sliding out of the limit groove 122 by setting the limit member 20, so that the connection seat 131 can be fixed in the installation groove 12 to realize the fixing of the moving wheel 13 and the box body 11. In this way, when the water tank 10 is transported to perform operations such as pouring water, the water tank 10 can be pushed to move, which can reduce the situation of lifting or holding the water tank 10 for transportation, and is very convenient for the user to carry the water tank 10.

In addition, in the way of directly attaching the connection seat 131 to the box body 11 by using screws, the screws are the main limiting structure. In order to ensure the stability of the screws, it is necessary to set screw column at the bottom of the box body 11 for screw connection. However, the arrangement of the screw column will increase the size of the bottom of the box body 11 in the height direction, that is, the overall height of the water tank 10 will be increased when the volume of the water tank 10 remains unchanged. If the height of the water tank 10 is kept unchanged, the volume of the water tank 10 will be reduced. In this solution, after the connection seat 131 is inserted into the limit groove 122, the limit groove 122 can restrict the connection seat 131 from moving in the direction of the notch of the installation groove 12. The limit member 20 only needs to limit the connection seat 131 from sliding out of the limit groove 122 to fix the connection seat 131 on the bottom of the box body 11. That is to say, the connection seat 131 is limited in two directions by the limit groove 122 and the limit member 20, so that the pressure of the limit member 20 and the limit groove 12 is reduced. In this way, there is no need to add too many connecting structures at the bottom of the water tank 10 for enhancing the stability of the limit member 20, so that while ensuring the stable installation of the moving wheel 13, it is beneficial to simplify the structure of the bottom of the water tank 10 and avoid the case of increasing the overall height of the water tank 10 or reducing the volume of the water tank 10.

In an embodiment, the bottom of the box body 11 is provided with a plurality of reinforcing ribs that are connected to each other, and the adjacent reinforcing ribs are enclosed to form the installation groove 12. In this way, the structural strength of the bottom of the box body 11 can be increased through the reinforcing ribs, and the reinforcing ribs can be used to form the installation groove 12, so that the structure of the water tank 10 is more compact.

In an embodiment, the installation groove 12 includes a first groove body 121 and a second groove body 125 connected to each other. The groove side wall of the first groove body 121 is provided with a limit rib 123, and the limit rib 123 is spaced from the groove bottom wall of the first groove body 121 to form the limit groove 122. The connection seat 131 slides into the limit groove 122 from the second groove body 125, and the limit member 20 is installed in the second groove body 125. Specifically, the installation groove 12 has a first groove side wall and a second groove side wall opposite to each other, that is, the first groove body 121 is formed with a first groove side wall, and the second groove body 125 is formed with a second groove side wall. The limit rib 123 and the limit groove 122 extend along the distribution direction of the first groove side wall and the second groove side wall. When the moving wheel 13 is installed, first the connection seat 131 is put into the second groove body 125, and then the connection seat 131 in the second groove body 125 is slid into the first groove body 121 and the limit groove 122. After the connection seat 131 is slid into the limit groove 122, the side of the connection seat 131 away from the second groove body 125 can be abutted against the first groove side wall to prevent the connection seat 131 from coming out of the installation groove 12 in the direction away from the second groove body 125. When the limit member 20 is installed on the second groove body 125, the second groove side wall can limit the movement of the limit member 20 in a direction away from the first groove body 121. Since the limit member 20 is mainly subjected to the force along the distribution direction of the first groove side wall and the second groove side wall, when it is arranged in this way, the limiting effect of the limit member 20 on the connection seat 131 can be ensured, and the reliability is high. In other embodiments, the limit member 20 may also be a pin or a screw that passes through the limit rib 123 and extends into the insertion hole on the connection seat 131.

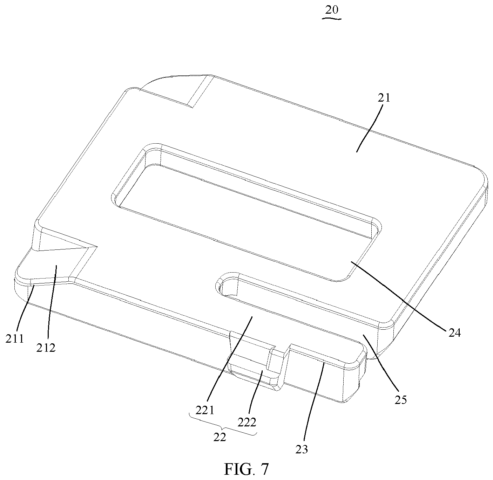

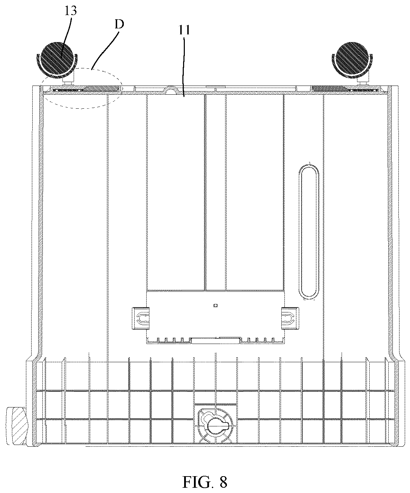

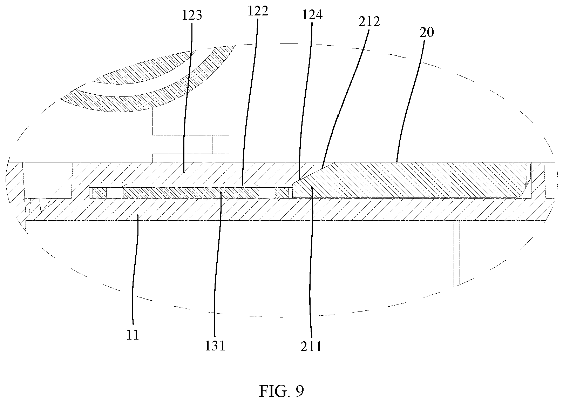

Referring to FIG. 7 to FIG. 9, in an embodiment, the limit member 20 is provided with an insertion member 211. When the limit member 20 is installed in the second groove body 125, the insertion member 211 is inserted into the limit groove 122 and is located on a moving path of the connection seat 131 moving toward the second groove body 125. That is, the insertion member 211 is inserted into one end of the limit groove 122 close to the second groove body 125 to restrict the movement of the connection seat 131 toward the second groove body 125. That is, when the limit member 20 is installed in the second groove body 125, the insertion member 211 is inserted into one end of the limit groove 122 close to the second groove body 125. When the connection seat 131 moves toward the direction of the second groove body 125, the connection seat 131 can abut against the insertion member 211, thereby restricting the connection seat 131 from moving toward the second groove body 125 and out of the limit groove 122. Moreover, when the insertion member 211 is inserted into the limit groove 122, the limit rib 123 can restrict the insertion member 211 from moving toward the notch of the installation groove 12, that is, the limit member 20 can be restricted from coming out of the second groove body 125. In other embodiments, the insertion member 211 may not be provided.

In an embodiment, the limit rib 123 is formed with a first inclined surface 124 at the insertion hole of the limit groove 122. In the direction from the first groove body 121 to the second groove body 125, the first inclined surface 124 gradually extends obliquely in a direction away from the groove bottom wall of the first groove body 121. That is, in the direction from the first groove body 121 to the second groove body 125, the distance between the first inclined surface 124 and the groove bottom wall of the first groove body 121 gradually increases, so that the insertion hole of the limit groove 122 expands, thereby facilitating the insertion of the insertion member 211 into the limit groove 122. In other embodiments, the first inclined surface 124 may not be provided.

In an embodiment, the insertion member 211 has a second inclined surface 212, and the second inclined surface 212 is gradually inclined and extended in a direction close to the groove bottom wall of the first groove body 121 in the insertion direction of the insertion member 211 into the limit groove 122. The second inclined surface 212 faces the limit rib 123. In the insertion direction of the insertion member 211 into the limit groove 122, the thickness of the insertion member 211 gradually decreases, so that the insertion member 211 is substantially in the shape of a wedge-shaped block, which is convenient to insert the insertion member 211 into the limit groove 122. Furthermore, in the embodiment in which the first inclined surface 124 is provided, the first inclined surface 124 can be abutted against the second inclined surface 212, and the insertion member 211 can be tightly fitted and inserted into the limit groove 122. In other embodiments, the second inclined surface 212 may not be provided.

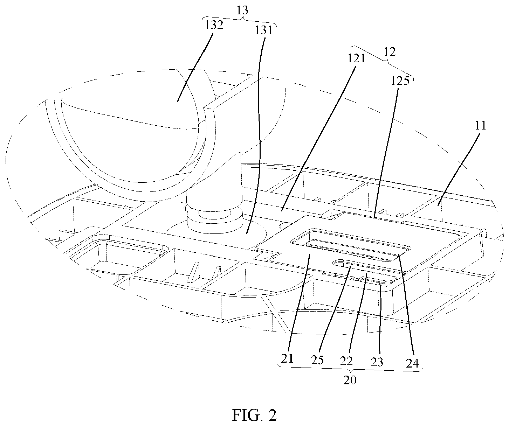

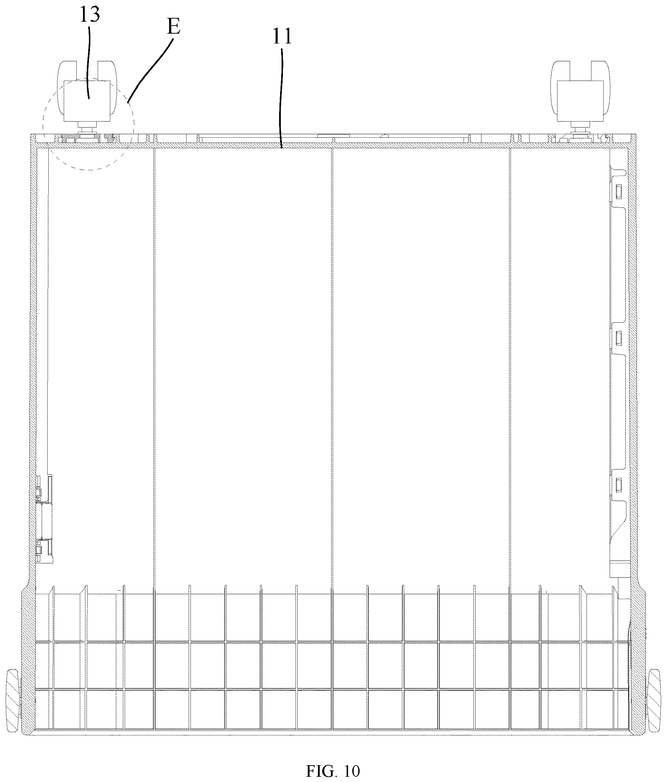

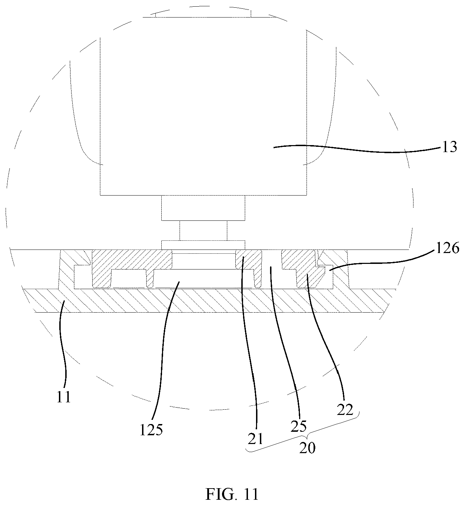

Referring to FIG. 2, FIG. 6, FIG. 7, FIG. 10 and FIG. 11, in an embodiment, the limit member 20 is engaged with the second groove body 125. That is to say, when the limit member 20 is installed into the second groove body 125, the limit member 20 can be clamped with the second groove body 125, so that the installation process of the limit member 20 is simple, the operation is convenient, and the assembly efficiency is improved. In other embodiments, the limit member 20 can also be locked to the second groove body 125 by screws.

In an embodiment, a snap slot 126 is provided on the groove side wall of the second groove body 125, and the limit member 20 is provided with an elastic buckle 22. The elastic buckle 22 is engaged with the snap slot 126. Specifically, the elastic deformation direction of the elastic buckle 22 is substantially perpendicular to the groove side wall of the second groove body 125 where the snap slot 126 is provided. By arranging the elastic buckle 22, the friction between the limit member 20 and the second groove body 125 can be reduced during the clamping process, thereby reducing wear of the limit member 20 and the second groove body 125. It is also convenient to remove the limit member 20 from the second groove body 125 to facilitate maintenance or replacement of the moving wheel 13. The snap slot 126 may be provided on the second groove side wall, or the snap slot 126 may also be provided on the groove side wall of the second groove body 125 connected to the second groove side wall. In other embodiments, a snap protrusion or a snapping button may also be provided on the groove side wall of the second groove body 125, so that the snap protrusion or snap button is snap-fitted to the limit member 20.

In addition, one or more elastic buckles 22 may be provided on the limit member 20. For example, in order to enhance the stability of the limit member 20, in an embodiment, two elastic buckles 22 are provided, and two elastic buckles 22 are respectively provided on two opposite sides of the limit member 20. Two opposite groove side walls of the second groove body 125 are provided with snap slots 126. The number of the elastic buckles 22 can also be three or four and so on.

In an embodiment, the limit member 20 includes a main body 21 and an elastic buckle 22. A side of the main body 21 toward the snap slot 126 is formed with an avoidance gap 25, and the elastic buckle 22 includes an elastic arm 221 and a clamping protrusion 22 laterally protruding from the elastic arm 221. The elastic arm 221 is disposed in the avoidance gap 25 and connected to the main body 21. The side of the elastic arm 221 away from the snap slot 126 is spaced from the main body 21, and the clamping protrusion 22 is engaged with the snap slot 126. Specifically, the clamping protrusion 22 is protruded from the side of the elastic arm 221 toward the snap slot 126, and the elastic arm 221 extends along the length direction of the groove side wall of the second groove body 125 where the snap slot 126 is provided. The elastic arm 221 and the main body 21 are integrally formed, and the avoidance gap 25 can provide a deformation space for the elastic arm 221. In this way, the limit member 20 has an integral structure, which can simplify the structure of the limit member 20, facilitate assembly, and reduce costs. In other embodiments, a mounting hole can also be provided in the limit member 20. The elastic buckle 22 includes a compression spring and a clamping post connected to one end of the compression spring, and the compression spring is arranged in the mounting hole. The clamping post is at least partially protruded from the mounting hole and can be snap-fitted into the snap slot 126.

In an embodiment, the elastic arm 221 is provided with an unlock member for opening the clamping protrusion 22 and the snap slot 126. That is, when the limit member 20 needs to be disassembled, the elastic arm 221 is deformed toward the avoidance gap 25 by operating the unlock member, and after the clamping protrusion 22 is disengaged from the snap slot 126, the limit member 20 can be released from the snap slot 126. The structure of the unlock member can be various, for example. In an embodiment, the unlock member includes an unlock gap 23 disposed on the elastic arm 221, and the unlock gap 23 is located on a side of the elastic arm 221 toward the snap slot 126. That is, when the limit member 20 is installed on the second groove body 125 and the clamping protrusion 22 is inserted into the snap slot 126, the elastic arm 221 has a larger gap when the unlock gap 23 is located between the groove side walls of the second groove body 125. When the limit member 20 needs to be disassembled, by extending the tool etc. to the unlock gap 23, and deforming the elastic arm 221 toward the avoidance gap 25, the clamping protrusion 22 is released from the snap slot 126 to realize the unlocking of the elastic buckle 22 in the snap slot 126. The structure is simple, easy to form, and can also ensure that the outer surface of the limit member 20 is flat. In other embodiments, an unlocking protrusion or a pull ring may also be provided on the surface of the elastic arm 221 away from the groove bottom wall of the second groove body 125. In addition, in other embodiments, the unlock member may not be provided.

In an embodiment, the limit member 20 is further provided with a pull-out member, and the pull-out member is used to pull out the limit member 20 from the second groove body 125. Specifically, the pull-out member is located on the side of the limit member 20 exposed outside the second groove body 125, that is, on the side of the limit member 20 away from the groove bottom wall of the second groove body 125. After the elastic buckle 22 is unlocked in the snap slot 126, the limit member 20 can be taken out from the second groove body 125 by operating the pull-out member. The unlock member may have various structures. For example, in an embodiment, the pull-out member includes a cutout hole 24 that passes through at least a surface of the limit member 20 away from the groove bottom wall of the second groove body 125. That is, when taking out the limit member 20, a disassembly tool or the like can be inserted into the cutout hole 24, and the limit member 20 can be taken out from the second groove body 125. The structure is simple, easy to form, and can also ensure that an outer surface of the limit member 20 is flat. In other embodiments, a protrusion or a pull ring may also be provided on the surface of the elastic arm 221 away from the groove bottom wall of the second groove body 125. In addition, in other embodiments, the pull-out member may not be provided.

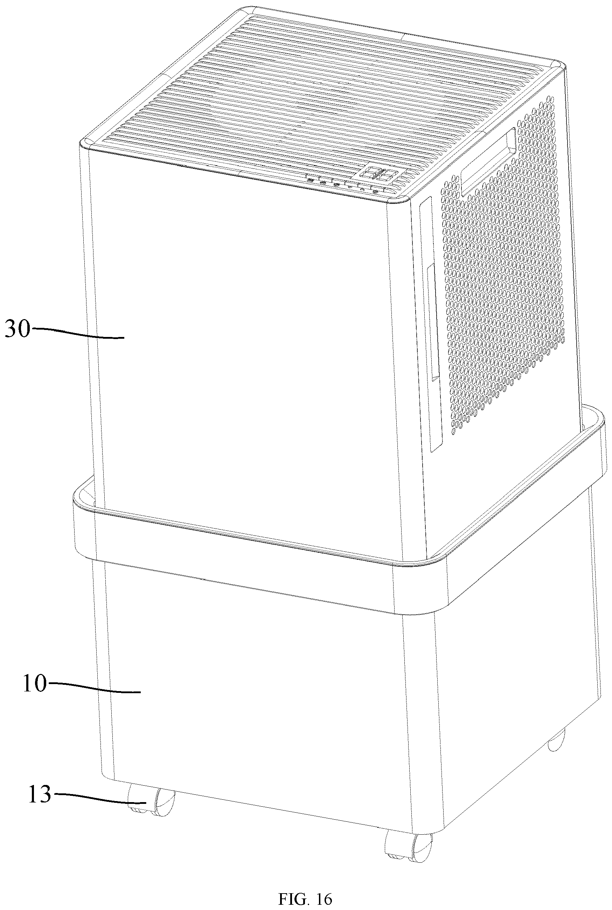

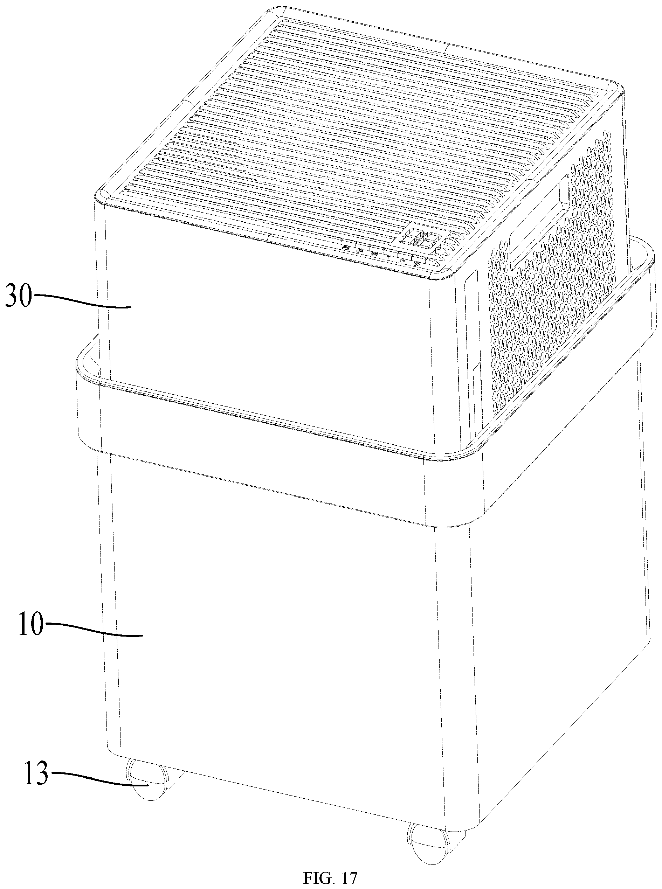

The present application also provides a dehumidifier, referring to FIG. 16 and FIG. 17, the dehumidifier includes a body 30 and a water tank 10, and the specific structure of the water tank 10 refers to the above-mentioned embodiment. Because the dehumidifier adopts all technical solutions of the above-mentioned embodiments, therefore it at least has all the beneficial effects brought by the technical solutions of the above embodiments, which will not be repeated here. The dehumidifier has a working state and a non-working state. In the working state, the body 30 is located at the upper end of the water tank 10, and in the non-working state, the body 30 is at least partially accommodated in the water tank 10.

It can be understood that, in this embodiment, the body 30 includes a casing and a dehumidification device disposed in the casing. In the working state, the dehumidified water generated by the dehumidification device can fall into the water tank 10. In an embodiment, the dehumidification device includes a compressor, an evaporator and a condenser. The water vapor in the air is first condensed into water droplets through the evaporator to remove the water vapor in the air, and then the air after removing the water vapor is heated and dried by the condenser to make the blown air return to normal temperature. In other embodiments, the dehumidification device may also adopt a dehumidification method such as an adsorption type.

That is to say, the water tank 10 is arranged outside the body 30. When the body 30 needs to work, the body 30 can be lifted so that the body 30 extends out of the water tank 10, and the bottom of the body 30 and the bottom of the water tank 10 are spaced apart (i.e., the body 30 can be located on the upper end of the water tank 10 as a whole, or the part with the air inlet and the air outlet can be located on the upper end of the water tank 10, and the part at the bottom of the body is located in the water tank 10, so as to ensure that the bottom of the body 30 is spaced from the bottom of the water tank 10.) In this way, the water generated when the body 30 is working can be drained into the water tank 10. When the body 30 finishes working and the water in the water tank 10 is discharged, the body 30 is put into the water tank 10 so that the body 30 is in a non-working state. The body 30 may be in the shape of a cylinder, an elliptical cylinder or a prism, and the shape of the water tank 10 is adapted to the shape of the body 30. When the body 30 is in the shape of a prism, it can be in the shape of a square, a regular pentagon, a regular hexagon, or the like.

In this way, the whole dehumidifier can be moved by the moving wheel 13 both in the non-working state and in the working state, which can facilitate the transportation of the dehumidifier or the adjustment of the position of the dehumidifier. Compared with the dehumidifier in which the water tank 10 is arranged in the body 30, in this way, the volume of the water tank 10 is larger, the water storage capacity of the water tank 10 is increased, the number of times the user pours water is reduced, and the weight of the body 30 is also reduced. Therefore, it is possible to facilitate the user to carry the body 30. Moreover, in the non-working state, by accommodating the body 30 in the water tank 10, the center of gravity of the dehumidifier can be lowered, so that the placement of the dehumidifier is more stable, and it is not easy to deviate, and the overall occupied space of the dehumidifier is also reduced, which can be convenient for users to place the dehumidifier. In addition, in the working state, the body 30 is in a higher position, which is equivalent to increasing the height of the air outlet on the dehumidifier, so that the dehumidified air can be blown to a farther position, which is beneficial to improve the indoor air flow range.

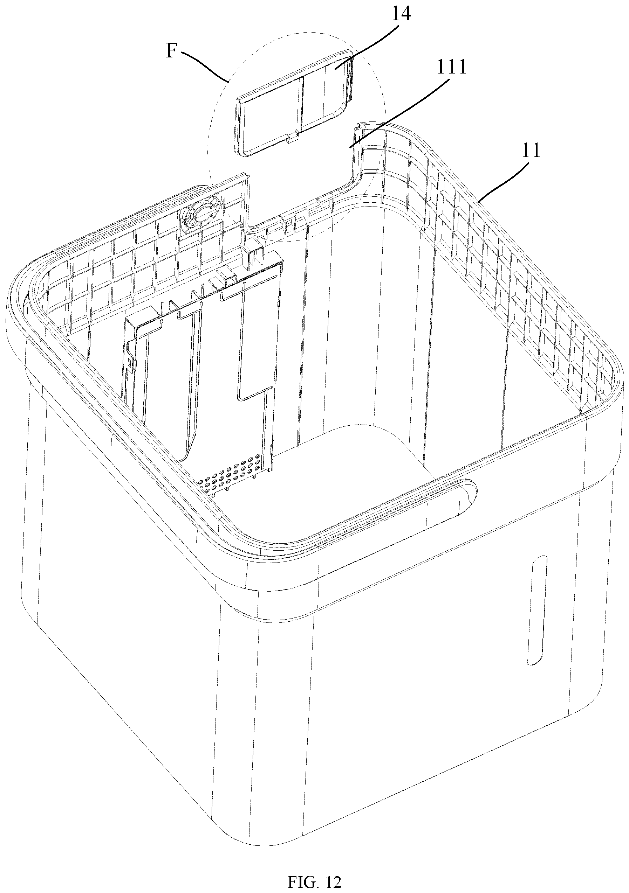

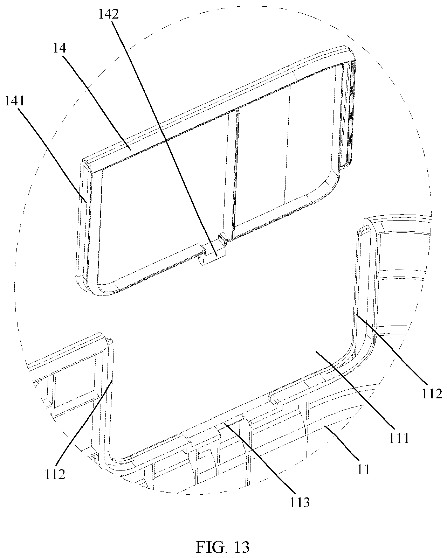

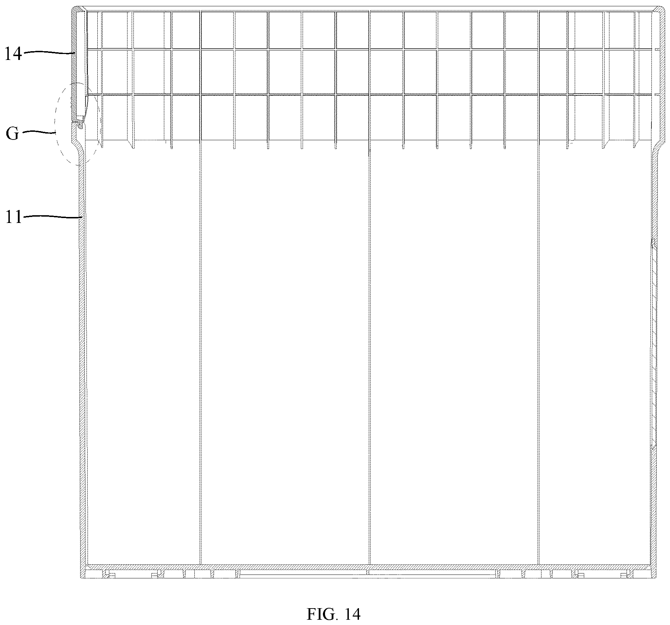

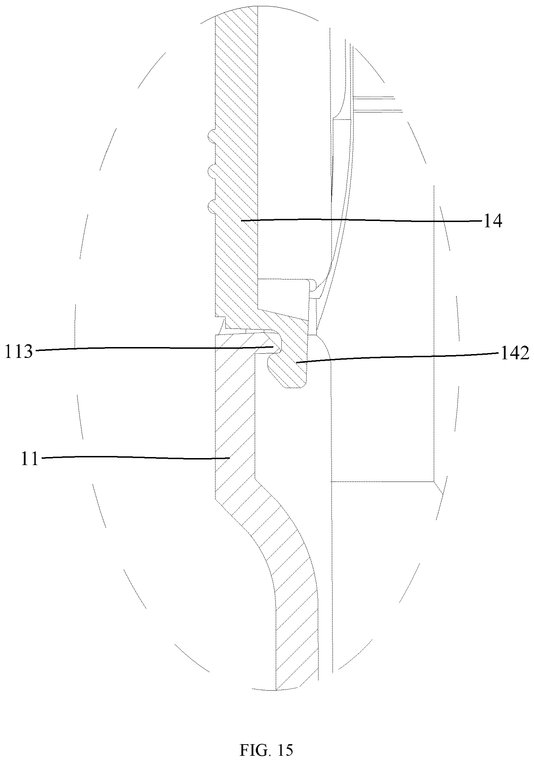

Referring to FIG. 12 to FIG. 15, in an embodiment, the body 30 is provided with a drain connector, and the drain connector is used to drain the dehumidified water from the water receiving tray of the body 30 or to drain the dehumidified water in the water tank 10. For example, the drain connector is connected to the lowest position of the water receiving tray, so that the drain connector forms a permanent drain level to preferentially drain the dehumidified water in the water receiving tray, and when the drain connector is sealed, the dehumidified water in the water receiving tray flows to the water tank 10. Alternatively, a drain pump can be arranged in the body 30, so that the water inlet end of the drain pump is connected to the water tank 10, and the water outlet end of the drain pump is connected to the drain connector, so that the dehumidified water in the water tank 10 can be discharged through the drain pump and the drain connector.

In an embodiment, the upper end of the box body 11 is provided with a drain gap 111. The water tank 10 further includes a drain cover 14, and the drain cover 14 is detachably installed in the drain gap 111. Specifically, in the working state, the body 30 is partially located on the inner side of the upper end side wall of the box body 11, that is, the part of the body 30 with the drain connector is located on the inner side of the upper end side wall of the box body 11, and the drain connector and the drain gap 111 are corresponded. When the drain cover 14 is removed from the drain gap 111, the external drainpipe can be connected to the drain connector, so as to drain. When no drain is required, the drain cover 14 can be installed in the drain gap 111, so as to ensure the integrity of the box body 11 and reduce the possibility of items falling into the box body 11. In addition, in the working state, the contact area between the box body 11 and the body 30 is increased by placing the body 30 partly on the inner side of the upper end side wall of the box body 11. The upper end side wall of the box body 11 can also reduce the possibility of the body 30 tilting sideways, which improves the stability of the body 30 in the working state. In other embodiments, the drain gap 111 and the drain cover 14 may not be provided. For example, in the working state, the drain connector is exposed from the upper end of the box body 11.

In an embodiment, one of the drain gap 111 and the drain cover 14 is provided with a slide rail 112, and the other is provided with a slide groove 141. The drain cover 14 is installed in the drain cover 14 through the sliding fit of the slide groove 141 and the slide rail 112. Specifically, a slide rail 112 can be provided at the drain gap 111, a slide groove 141 can be provided on the drain cover 14, and the slide rail 112 may extend in the up-down direction. When installing the drain cover 14, the drain cover 14 can be slid into the drain gap 111 along the slide rail 112 from top to bottom by matching the upper slide groove 141 of the drain cover 14 with the slide rail 112. In this way, the structure is simple and the installation is convenient. In addition, the slide groove 141 may also be provided at the drain gap 111, and the slide rail 112 may be provided on the drain cover 14. In other embodiments, the drain cover 14 can also be directly snap-fitted together or fixed on the box body 11 by screws, so as to cover the drain gap 111.

In an embodiment, the lower end of the drain cover 14 is fastened to the edge of the drain gap 111. That is, after sliding the drain cover 14 into the drain gap 111 from top to bottom, and moving the lower end of the drain cover 14 to the lower edge of the drain gap 111, the lower end of the drain cover 14 can be fastened to the edge of the drain gap 111. Therefore, the drain cover 14 can be restricted from moving in the up-down direction to come out from the drain gap 111, so that the structure is simple and the installation is convenient. In other embodiments, after the drain cover 14 is slid into the drain gap 111, the drain cover 14 and the box body 11 may be fixed by screws.

In an embodiment, the lower side of the drain cover 14 is provided with a buckle 142, and the edge of the drain gap 111 is provided with a flange 113. The buckle 142 is snap-fitted with the flange 113. Specifically, the flange 113 is arranged on the inner side of the box body 11, and the flange 113 may only be arranged at the position corresponding to the buckle 142, or the flange 113 may extend along the edge of the drain gap 111 to enhance the structural strength of the drain gap 111. In other embodiments, the buckle 142 can also be provided on the edge of the drain gap 111, and the lower side of the drain cover 14 is provided with a rib. The buckle 142 is engaged with the rib.

The above are only some embodiments of the present application, and are not intended to limit the scope of the present application. Under the inventive concept of the present application, the equivalent structural transformations made by using the description of the application and the contents of the accompanying drawings, or direct/indirect applications in other relevant technical fields are included in the scope of the present application.

## Claims

1. A water tank for a dehumidifier, comprising: a box body, an installation groove being provided at a bottom of the box body, and two opposite side walls of the installation groove being provided with limit grooves; a moving wheel provided with a connection seat and a wheel body mounted at the connection seat, two opposite sides of the connection seat being respectively installed in the two limit grooves; and a limit member disposed at least partially in the installation groove, so as to restrict the connection seat from sliding out of the limit groove.

2. The water tank according to claim 1, wherein: the installation groove comprises a first groove body and a second groove body connected to the first groove body; a groove side wall of the first groove body is provided with a limit rib, and the limit rib is spaced apart from a groove bottom wall of the first groove body to form the limit groove; the connection seat is configured to slide into the limit groove from the second groove body; and
the limit member is mounted at the second groove body.

3. The water tank according to claim 2, wherein the limit member is provided with an insertion member configured to be inserted in one end of the limit groove close to the second groove body when the limit member is installed in the second groove body, to limit the movement of the connection seat toward the second groove body.

4. The water tank according to claim 3, wherein: a first inclined surface is formed at an insertion hole of the limit rib, and in a direction in which the first groove body points to the second groove body, the first inclined surface is configured to extend in a direction away from the groove bottom wall of the first groove body obliquely; and/or the insertion member is provided with a second inclined surface, and, in a direction of inserting the insertion member into the limit groove, the second inclined surface is configured to extend toward the direction close to the groove bottom wall of the first groove body obliquely.

5. The water tank according to claim 2, wherein the limit member is engaged with the second groove body.

6. The water tank according to claim 5, wherein a groove side wall of the second groove body is provided with a snap slot, the limit member is provided with an elastic buckle, and the elastic buckle is engaged with the snap slot.

7. The water tank according to claim 6, wherein: the limit member comprises a main body and the elastic buckle; a side of the main body toward the snap slot is formed with an avoidance gap; the elastic buckle comprises an elastic arm and a snap protrusion laterally protruding from the elastic arm; the elastic arm is arranged in the avoidance gap and connected to the main body, and a side of the elastic arm away from the snap slot is spaced from the main body; and the snap protrusion is engaged with the snap slot.

8. The water tank according to claim 7, wherein the elastic arm is provided with an unlock member configured to open the snap protrusion and the snap slot.

9. The water tank according to claim 8, wherein the unlock member comprises an unlock gap provided at the elastic arm, and the unlock gap is located on a side of the elastic arm toward the snap slot.

10. The water tank according to any one of claims 2 to 9, wherein the limit member is further provided with a pull-out member, and the pull-out member is configured to pull the limit member out from the second groove body.

11. The water tank according to claim 10, wherein the pull-out member comprises a cutout hole, and the cutout hole passes through at least a surface of the limit member away from a groove bottom wall of the second groove body.

12. The water tank according to any one of claims 1 to 9, wherein an upper end of the box body is provided with a drain gap, and the water tank further comprises a drain cover detachably mounted at the drain gap.

13. The water tank according to claim 12, wherein: one of the drain gap and the drain cover is provided with a slide rail, and another one of the drain gap and the drain cover is provided with a slide groove; and the slide groove is slidably matched with the slide rail to make the drain cover fit into the drain gap.

14. The water tank according to claim 13, wherein a lower end of the drain cover is snap-fitted with an edge of the drain gap.

15. The water tank according to claim 14, wherein a lower side of the drain cover is provided with a buckle, and the edge of the drain gap is provided with a flange; the buckle is snap-fitted with the flange.

16. A dehumidifier, comprising: a body; and the water tank according to any one of claims 1 to 15, wherein the dehumidifier is configured to be in: a working state, in which the body is located at an upper end of the water tank, and a non-working state, in which the body is at least partially accommodated in the water tank.
